Europäisches Patentamt

European Patent Office

Office européen des brevets

(19)

(11) Numéro de publication: **0 019 547**
**B1**

(12) **FASCICULE DE BREVET EUROPEEN**

(45) Date de publication du fascicule du brevet: **28.03.84**

(51) Int. Cl.³: **B 60 J 3/00**

(21) Numéro de dépôt: **80400666.6**

(22) Date de dépôt: **14.05.80**

(54) **Vitrage anti-éblouissant pour véhicule.**

(30) Priorité: **19.05.79 DE 2920363**
**05.09.79 DE 2935822**

(43) Date de publication de la demande:
**26.11.80 Bulletin 80/24**

(45) Mention de la délivrance du brevet:
**28.03.84 Bulletin 84/13**

(84) Etats contractants désignés:
**BE DE FR GB IT LU NL SE**

(56) Documents cités:
**BE - A - 633 745**
**DE - C - 852 293**
**FR - A - 755 546**
**FR - A - 1 118 812**
**FR - A - 2 238 164**
**FR - A - 2 399 331**
**GB - A - 729 734**
**GB - A - 749 181**
**GB - A - 1 002 024**
**US - A - 1 577 527**

(73) Titulaire: **SAINT-GOBAIN VITRAGE**
**Les Miroirs 18, avenue d'Alsace**
**F-92400 Courbevoie (FR)**
(84) **BE FR GB IT LU NL SE**

(73) Titulaire: **VEGLA Vereinigte Glaswerke GmbH**
**Viktoria Allee 3-5**
**D-5100 Aachen (DE)**
(84) **DE**

(72) Inventeur: **Kunert, Heinz**
**23 Am Krielerdom**
**D-5000 Köln 41 (DE)**

(74) Mandataire: **Eudes, Marcel et al,**
**Saint-Gobain Recherche 39 Quai Lucien Lefranc**
**F-93304 Aubervilliers Cedex (FR)**

Courier Press, Leamington Spa, England.

Vitrage anti-éblouissant pour véhicule

L'invention a trait à un vitrage transparent pour véhicules et particulièrement à un pare-brise qui présente en dehors du champ de vision principal des zones de transmission réduite dans le spectre visible.

On connait déjà des pare-brises qui présentent une transmission réduite à la partie supérieure; cette partie supérieure obscurcie sert de protection contre l'éblouissement direct du conducteur par les rayons du soleil venant du dessus et aussi contre la chaleur. Dans les vitrages feuilletés, on réalise habituellement cette partie supérieure par emploi de couches intercalaires de matière thermoplastique porteuses d'un filtre en bande de coloration uniforme, ou dégradée.

Aussi, il est connu d'après le brevet français FR—A—755 546 des vitrages feuilletés comprenant deux feuilles de verre et une couche médiane d'une composition appropriée dans laquelle au moins une partie de la couche médiane est colorée, de sorte que ces vitrages ont des propriétés éblouissantes.

Cependant la vue du conducteur à l'intérieur du véhicule peut être gênée aussi bien par un aveuglement indirect que par l'ébouissement direct qui résulte le jour de la lumière du soleil bas sur l'horizon ou la nuit de la lumière des phares des véhicules arrivant en face. On n'a prêré jusqu'à présent que fort peu d'attention à l'influence de l'aveuglement indirect provoqué par les surfaces réfléchissantes et diffusantes de la partie de la route située tout de suite devant le véhicule, le capot ou la surface diffusante du pare-brise lui-même. Aussi ne connait-on pass de dispositifs efficaces pour diminuer ces causes de gêne.

La lumière tombant sur une plaque transparente, par exemple sur un pare-brise n'est pas toujours transmise par réfraction ou renvoyée par réflexion, mais, il existe toujours des défauts qui provoquent des écarts avec les directions lumineuses attendues selon ces lois.

Le pare-brise du véhicule doit en fait être considéré comme un milieu dispersif éclairé qui conduit, particulièrement de nuit, à une gêne visible par création d'un voile lumineux. Sur des pare-brise très dispersifs, ce voile n'apparait pas seulement sous l'effet de la lumière directe mais aussi, comme des recherches l'ont montré, par la lumière des propres feux du véhicule réfléchie sur la route et la lumière d'éclairage des rues, réfléchie sur le capot du moteur.

En ce qui concerne la visibilité d'un objet, prévaut la différence relative d'intensité d'éclairement entre celui-ci et le champ environnant (contraste photométrique) selon la relation suivante:

$$K=\frac{Bo-Bu}{Bu+Bo}$$

où

K=contraste photométrique,
Bu=densité d'éclairement du champ,
Bo=densité d'éclairement de l'objet.

L'aveuglement par un voile ou brouillard lumineux vient superposer à la grandeur Bu la grandeur Bs de la densité d'éclairement du voile formé par la plaque transparente dispersive. On a alors:

$$K_s=\frac{Bo-Bu}{Bu+Bo+2B_s}$$

où

$B_s$=densité d'éclairement du voile.

Ks prend en ce cas des valeurs toujours inférieures à K.

La faculté pour l'oeil de distinguer des différences d'intensité lumineuse exige une valeur minimale de K pour un niveau donné d'éclairement; or K est proportionnel à la distance d'observation. Il se produit donc toujours une diminution de la distance de visibilité.

Le verre lui-même et, pour les pare-brise en verre feuilleté, les couches de matière plastique ne seraient déjà pas à considérer comme optiquement vides: on peut y mesurer une proportion de dispersion de la lumière d'environ 0,4% due aux impuretés et aux trés fines inclusions de corps étrangers.

Mais, en outre, les pare-brise utilisés dans la circulation courante présentent toujours des irrégulairés de surface, des rayures et entailles qui agissent comme centres de diffusion de la lumière. De même, les particules de poussière et les dépôts de saleté et d'humidité présentés à la surface du vitrage créent de la lumière diffuse.

Une série de recherches ont montré qu'il existe un haut degré de corrélation entre la durée d'utilisation d'un pare-brise en son facteur de dispersion de lumière. Le numbre d'altérations occasionnées par le frottement de l'essuie-glace et par les écaillements dus aux graviers augmente avec l'âge et sur les pare-brise de véhicules ayant parcouru 100.000 km. on peut mesurer des valeurs de diffusion de la lumière allant de 2 à 4% sur des pare-brise sales, poussiéreux, ou couverts intérieurement de condensats de nicotine du de plastifiants... peut s'ajouter une diffusion du même ordre de grandeur. En cas de condensation d-humidité sur la face interne du pre-brise, ou de présence d'un film d'eau sur la face externe, on peut mesurer des taux de diffusion lumineuse atteignant 15%. L'effet d'éblouissement d'un tel vitrage, qui agit en pratique comme une plaque éclairante qui rayonne de la lumière diffuse, dépend de l'intensité du flux lumineux tombant sur le vitrage, de la nature et des dimensions des agents dispersants et aussi de sa taille.

La lumière des propres phares du véhicule et de l'éclairage des rues réfléchie sur la chaussée ou sur le capot du moteur, donc son éclairement indirect intervient aussi d'une manière importante dans la création d'un voile.

A ce sujet et particulièrement avec l'emploi des lampes à halogène l'élévation du niveau d'éclairage cause, lorsque la surface de la chaussée est fortement réfléchissante, un retour de lumière assez intense pour qu'il faille le considérer non seulement comme source d'un voile lumineux sur les pare-brise dispersifs, mais encore, dans certains, comme une cause directe d'éblouissement relatif, ébouissement d'adaptation et même éblouissement absolu.

La présente invention a pour objet de créer un pare-brise diminuant l'aveuglement lié au voile créé par l'effet diffusant du pare-brise ainsi qui l'éblouissement indirect ou relatif dû à la lumière qui pénètre par des parties du vitrages situées hours du champ de vision principal, en particulier la lumière réfléchie par le capot et les zones de la route proches du véhicule.

Le vitrage selon l'invention est un vitrage feuilleté comprenant deux feuilles de verre réunies par une couche intercalaire transparente présentant des zones obscurcies, cette couche intercalaire étant constitué de deux feuilles de matière plastique dont l'une présente une zone obscurcie située le long du bord supérieur du vitrage et l'autre une zone obscurcie située le long du bord inférieur du vitrage.

On peur ainsi fabriquer un parre-brise feuilleté à deux zones obscurcies en superposant pour former la couche plastique deux feuilles intercalaires qui présentent chacune en longueur une bande de transmission réduite, de façon à laisser subsister entre ces deux bandes, plus précisément entre leurs limites un champ de vision principal de largeur appropriée à la dimension du vitrage, en liaison avec celles du véhicule . . .

Il devient alors possible de fabriquer un seul ruban, ou si les propriétés de transmission dans les zones supérieures et inférieures sont différentes, d'en fabriquer seulement deux différents pour faire des pare-brise de dimensions les plus diverses pour tous les types de véhicules.

Au lieu de la feuille de PVB de 0,76 mm d'épaisseur que l'on utilise le plus souvent aujourd-hui pour fabriquer un parebrise, on utilisera par exemple deux feuilles de polyvinylbutyral de 0,38 mm d'épaisseur, colorées d'un côté sur une largeur d'environ 20 cm.

Ces feuilles, découpées de façon convenable dans un même ruban peuvent, de façon connue en soi, posséder une coloration décroissante jusqu'à leur partie non colorée.

Un exemple de réalisation de l'invention est décrit ci-dessous.

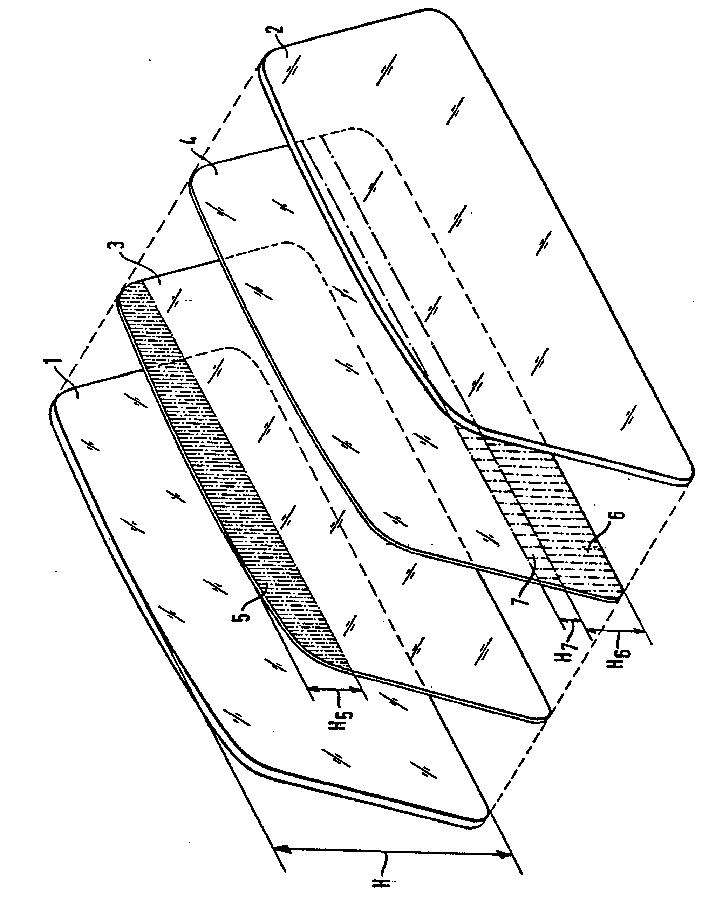

Cet exemple décrit un mode de fabrication en liaison avec la figure qui donne une représentation éclatée: le pare-brise comprend un vitrage (1) en verre de silicate de 3 mm d'épaisseur, un vitrage (2) en verre de silicate de 2 mm d'épaisseur et deux feuilles (3) et (4) en polyvinylbutyral de 0,38 mm d'épaisseur.

La feuille 3 présente, le long de son bord supérieur, une zone 5 de transmission réduite à environ 10%. La hauteur H5 de cette zone constitue environ 20% de la hauteur totale H du pare-brise.

Dans le champ restant la feuille 3 a une transmission d'environ 100%.

La feuille 4 présente, le long de son bord inférieur une zone 6 ayant une transmission d'environ 40% et une zone 7 qui s'y rattache avec une transmission d'environ 60%. La hauteur H6 de la zone 6 comprend environ 30% de la hauteur H de pare-brise en la hauteur H7 de la zone 7 environ 10% de cette hauteur H.

Les diverses zones 5, 6 et 7 peuvent être colorées en dégradé, leur transmission augmentant en direction du champ de vision principal. Ces diverses couches 1, 2, 3 et 4 sont assemblées en un vitrage feuilleté de façon connue et usuelle.

Les feuilles 3 et 4 sont découpées dans des rubans plus larges à un emplacement tel que la limite entre les zones colorées et les zones entièrement transparentes pour la pare-brise monté se trouve aux hauteurs optimales déterminées par l'oeil et la carrosserie.

**Revendications**

1. Vitrage du type feuilleté pour véhicule, comprenant deux feuilles de verre (1, 2) réunies par une couche intercalaire transparente présentant des zones obscurcies, caractérisé en ce que la couche intercalaire est constituée de deux feuilles de matière plastique (3, 4) dont l'une (3) présente une zone obscurcie (5) située le long du bord supérieur du vitrate et l'autre (4) une cone obscurcie (6, 7) située le long du bord inférieur de vitrage.

2. Vitrage selon la revendication 1, caractérisé en ce que l'obscurcissement des zones est décroissant jusqu'à la partie non obscurcie.

3. Procédé pour la fabrication d'un vitrage suivant la revendication 1, caractérisé en ce que, pour la fabrication de la couche intercalaire transparente, on prend deux feuilles de matière plastique (3, 4) qui présentent chacune une zone de transmission réduite le long du bord et que les deux feuilles sont placée l'une sur l'autre de telle sorte que le champ de vision principal entre les deux zones de transmission réduite soit dimensionné et disposé en fonction de la dimension du vitrate, et, au besoin, des dimensions de véhicule.

**Patentansprüche**

1. Verbundglasscheibe für Kraftfahrzeuge aus zwei Einzelglasscheiben (1, 2), die durch eine transparente, lichtabsorbierende Zonen aufweisende Zwischenschicht miteinander verbunden sind, dadurch gekennzeichnet, daß die Zwischenschicht aus zwei Kunststoffolien (3, 4) besteht, von denen eine (3) eine lichtabsorbierende Zone (5) entland des oberen Randes der Glasscheibe, und die andere (4) eine lichtabsorbierende Zone (6, 7) entland des unteren Randes der Glasscheibe aufweist.

2. Verbundglasscheibe nach Anspruch 1, dadurch gekennzeichnet, daß die Lichtabsorption der Zonen zum transparenten Teil hin abnimmt.

3. Verfahren zur Herstellung einer Verbundglasscheibe nach Anspruch 1, dadurch gekennzeichnet, daß für die Herstellung der transparenten Zwischenschicht zwei Kunststoffolien (3, 4) verwendet werden, die jeweils eine Zone mit verminderter Transmission entlang des Randes aufweisen, und daß die beiden Kunststoffolien so aufeinandergelegt werden, daß das Hauptsichtfeld zwischen den beiden Zonen mit verminderter Transmission in Abhängigkeit von den Abmessungen der Glasscheibe und gegebenenfalls von den Abmessungen des Fahrzeugs dimensioniert und angeordnet wird.

## Claims

1. A pane of the laminated type for a vehicle, comprising two glass sheets (1, 2) joined by a transparent intermediate layer having zones of reduced optical transmission, characterised in that the intermediate layer is formed of two sheets of plastics material (3, 4) of which one (3) has a zone of reduced optical transmission (5) situated along the upper edge region of the pane and the other (4) has a zone of reduced optical transmission (6, 7) situated along the lower edge region of the pane.

2. Pane according to claim 1, characterised in that the degree of reduction of optical transmission of the zones decreases towards the part of which optical transmission is not reduced.

3. Method of making a pane according to claim 2, characterised in that, for making the transparent intermediate layer there are provided two sheets of plastics material (3, 4) which each having a zone of reduced transmission along the edge region and the two sheets are placed one on the other so that the principal field of vision between the two zones of reduced transmission is dimensioned and positioned as a function of the dimensions of the pane and, as required, the dimensions of the vehicle.